Europäisches Patentamt

European Patent Office

Office européen des brevets

(11) Veröffentlichungsnummer: **0 271 792**
**A2**

(12) # EUROPÄISCHE PATENTANMELDUNG

(21) Anmeldenummer: 87118022.0

(51) Int. Cl.4: **G01F 23/24** , D06F 39/02

(22) Anmeldetag: 05.12.87

(30) Priorität: **13.12.86 DE 3642744**

(43) Veröffentlichungstag der Anmeldung:
**22.06.88 Patentblatt 88/25**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Saalmann, Günther**
**Birkenstrasse 50**
**D-5820 Gevelsberg(DE)**

(54) **Leerstandsmessvorrichtung.**

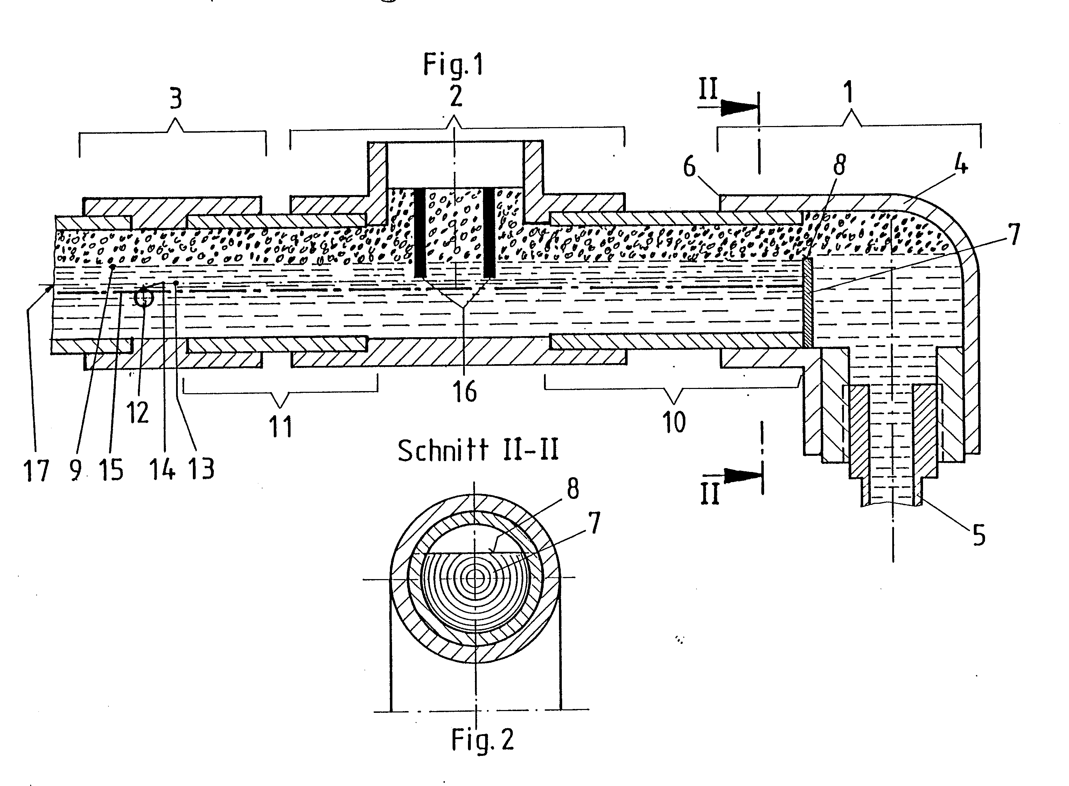

(57) Eine Leerstandsmeßvorrichtung für den Vorratstank einer Spülmaschine oder dergleichen ist außerhalb des Vorratstanks einerseits sowie der Spülmaschine andererseits angeordnet und enthält Niveaufühler (16) zwischen einem oberen und einem unteren Flüssigkeitsniveau (9; 15). Letztere werden durch eine Rückflußsperre (7) einerseits und durch eine auf eine Dosierpumpe zu schaltende Ansaugöffnung (12) andererseits definiert (Fig. 1).

Fig.1

Schnitt II-II

EP 0 271 792 A2

## "Leerstandsmeßvorrichtung"

Die Erfindung betrifft eine Leerstandsmeßvorricthung mit Niveaufühler des ein flüssiges Produkt, z. B. Reinigungs-oder Spülmittel, wie Flüssigreiniger oder Klarspüler, aufnehmenden Vorratstank einer Spülmaschine oder dergleichen mit einer Dosiervorrichtung zum Fördern von Produkt aus dem Vorratstank in die Spülmaschine.

Mit Hilfe von als Meß-oder Niveaufühler dienenden Elektroden läßt sich der Leerstand eines ein Spülmittel aufnehmenden Vorratstanks überwachen. Werden mehrere Spülanlagen aus jeweils einem Vorratstank versorgt, so ist für die Schaltung einer jeden Leerstandsanzeige eine Elektrode erforderlich. Diese Elektroden werden in der Praxis als Stab zusammengefaßt und durch ein mehradriges Elektrokabel mit elektronisch arbeitenden Leerstandsanzeigen verbunden. Beim Füllen oder Austausch des Vorratstanks ist das Elektrokabel für das Bedienungspersonal hinderlich und erscheint außerdem gefährlich.

Mit Hilfe eines einzigen Niveaufühlers lassen sich auch mehrere Leerstandsanzeigen schalten. Hierbei werden mit einer Elektrode über ein elektrisches Steuerungssystem die Leerstandsanzeigen von denjenigen Spülanlagen geschaltet, die sich in Betrieb befinden. Dieses System ist technisch und kostenmäßig aufwendig.

Ein grundsätzliches Problem bei Anordnung eine Niveaufühlers im Vorratstank besteht darin, daß der Tank im allgemeinen noch nicht vollständig leer ist, wenn die Leerstandsanzeige bereits erscheint.

Der Erfindung liegt die Aufgabe zugrunde, eine Leerstandsmeßvorrichtung für den Vorratstank mit einem außerhalb desselben angeordneten Niveaufühler zu schaffen, die es erlaubt, den Leerstand dann anzuzeigen, wenn der Vorratstank tatsächlich geleert ist. Eine weitere Aufgabe besteht darin, den Niveaufühler an einem Ort anzuordnen, der vom Bedienungspersonal für gewöhnlich nicht berührt wird und damit weder hinderlich noch gefährlich ist.

Die erfindungsgemäße Lösung besteht darin, daß eine zwischen Vorratstank und Dosierpumpe angeordnete Ansaugkammer über eine Rückflußsperre und eine Sauglanze mit dem Vorratstank in Verbindung steht, daß die Dosierpumpe einen Anschluß an der Ansaugkammer unterhalb deren durch die Rückflußsperre definierten oberen Flüssigkeitsniveaus besitzt und daß der Niveaufühler einem Flüssigkeitsspiegel zwischen dem oberen Flüssigkeitsniveau und einem bei geleertem Vorratstank durch Förderung der Dosierpumpe zu erreichenden unteren Flüssigkeitsniveau zugeordnet ist.

Erfindungsgemäß werden durch die Rückflußsperre und eine den Anschluß der Dosierpumpe in der Ansaugkammerwand bildende Versorgungsöffnung obere bzw. untere Niveaus des Produktspiegels in der Ansaugkammer bestimmt. In den Bereich zwischen diesen beiden Niveaus ragt ein Niveaufühler. Solange noch Flüssigkeit im Vorratstank vorhanden ist, steht der Flüssigkeitsspiegel in der Ansaugkammer am oberen Niveau, und der, vorzugsweise als Meßelektrode ausgebildete, Niveaufühler taucht in die Flüssigkeit ein. Wenn der Vorratstank geleert ist, sinkt der Flüssigkeitsspiegel in der Ansaugkammer vom oberen auf das untere Niveau; dadurch wird der Niveaufühler frei und zeigt den Leerstand im Vorratstank an.

Die Anordnung der Meßelektrode in einer außerhalb des Vorratstanks einerseits und der Spülmaschine andererseits angeordneten Ansaugkammer bringen den Vorteil, daß das Bedienungspersonal beim Austausch oder Nachfüllen des Vorratstanks mit derempfindlichen Meßvorrichtung nicht versehentlich in Berührung kommen kann. Außerdem läßt sich der außerhalb der Spülmaschine und des Vorratsbehälters angeordnete Niveaufühler einschließlich Beschaltung auch bei laufender Maschine problemlos warten bzw. auswechseln.

Gemäß weiterer Erfindung erscheint es zweckmäßig, die Ansaugkammer als horizontal angeordnetes Ansaugrohr auszubilden. In diesem Falle soll die Rückflußsperre als eine den unteren Teil des Ansaugrohrs gegen einen Rückfluß zum Vorratsbehälter verschließendes Kreissegment ausgebildet werden. Dieses soll zweckmäßig größenordnungsmäßig zwei Drittel bis drei Viertel des Rohrquerschnitts dammartig sperren und vorzugsweise eine waagerecht angeordnete Oberkante besitzen. Durch die Oberkante der Rückflußsperre wird das obere Niveau des Flüssigkeitsstands der Ansaugkammer definiert. Unterhalb dieser soll der höchste Punkt bzw. Scheitel des als Versorgungsöffnung bzw. Ansaugtülle bezeichneten Ansaugkammer - Anschlusses der Dosierpumpe angeordnet werden. Durch die Oberkante des Querschnitts der Versorgungsöffnung wird das untere Niveau des Flüssigkeitsstandes definiert. Dieser kann nämlich bur bis zum Querschnitt der Ansaugtülle absinken, weil die Dosierpumpe von da an nur noch Luft saugt.

Anhand der schematischen Darstellung eine Ausführungsbeispiels werden Einzelheiten der Erfindung erläutert. Es zeigen:

Fig. 1 einen Längsschnitt durch eine Leerstandsmeßvorrichtung; und

Fig. 2 einen Schnitt von Fig. 1 längs der Linie II-II.

Das in der Zeichnung dargestellte Ausführungsbeispiel zeigt eine Leerstandsmeßvorrichtung mit einer als horizontales Rohr ausgebildeten Ansaugkammer. Die Vorrichtung besteht im wesentlichen aus drei beispielsweise zusammenzusteckenden Einzelabschnitten, nämlich einem insgesamt mit 1 bezeichneten Ansaugabschnitt, einer mit 2 bezeichneten Meßkammer und einem mit 3 bezeichneten Versorgungsabschnitt.

Der Ansaugabschnitt 1 besteht aus einem Knie 4, an dessen unterem Ende ein Schlauch mit einer nur im Ansatzteil dargestellten Sauglanze 5 angeordnet wird. Die Sauglanze 5 ragt in einen ebenfalls nicht dargestellten Vorratstank hinein. An dem anderen waagerechten Ende 6 des Knies 4 befindet sich eine Rückflußsperrscheibe 7. Nach Fig. 2 verschließt die Rückflußsperrscheibe 7 etwa zwei Drittel des Kniequerschnitts im horizontalen Teil des Knies 4. Die obere Kante 8 der Rückflußsperrscheibe 7 definiert das obere Niveau 9 des Flüssigkeitsstandes in Meßkammer 2 und Versorgungsabschnitt 3 des horizontal angeordneten Ansaugrohrs.

Durch ein Verbindungsrohr 10 wird das Knie 4 mit der Meßkammer 2 verbunden und dieser wiederum über eine Verbindungsrohr 11 mit dem Versorgungsabschnitt 3. Der Versorgungsabschnitt 3 enthält eine Versorgungsöffnung 12, die sich vorzugsweise in Höhe der gemeinsamen Achse 13 der rohrförmigen Wand von Meßkammer 2 und Versorgungsabschnitt 3 befindet. Der höchste Punkt bzw. der obere Rand 14 der Versorgungsöffnung 12 definiert das untere Niveau 15. Bis in den Bereich zwischen oberem und unterem Niveau 9 bzw. 15 tauchen einen Niveaufühler bildende Elektroden 16 in die Meßkammer 2 ein.

An die Versorgungsöffnung 12 wird eine in der Zeichnung nicht dargestellte Dosierpumpe angeschlossen, welche bei Bedarf Produkt aus dem Vorratsbehälter über den Ansaugabschnitt 1 und die Meßkammer 2 in eine Spülmaschine oder dergleichen fördern soll. Der durch die Dosierpumpe hervorgerufene Unterdruck bewirkt, daß über die Ansauglanze Produkt aus dem Vorratstank gezogen wird, an der Rückflußsperrscheibe 7 vorbei in die Meßkammer 2 gelangt und weiter von dieser durch die Versorgungsöffnung 12 in die Spülmaschine gesaugt wird. Ist genügend Spülmittel in die Spülmaschine gefördert worden, schaltet die Dosierpumpe aus, und der Unterdruck im gesamten Rohrsystem wird aufgehoben. Dadurch fällt das in dem Ansaugabschnitt 1 befindliche Produkt wieder auf das Niveau des im Vorratstank vorhandenen Produkts. Die Rückflußsperrscheibe 7 jedoch verhindert ein Absinken des in der horizontalen Meßkammer 2 vorhandenen Produkts unter das obere Flüssigkeitsniveau 9.

Auf diese Weise wird erreicht, daß bei einem erneuten Einschalten der Dosierpumpe sofort Produkt in die Spülmaschine gesaugt werden kann und durch den erneut entstehenden Unterdruck weiterer Vorrat aus dem Vorratstank in die Ansaugkammer gefördert wird. Ist nun aber das Spülmittel im Vorratstank aufgebraucht, wird der Spülmittelvorrat in der Ansaugkammer trotz des durch die Dosierpumpe erzeugten Unterdrucks nicht ersetzt, und der Flüssigkeitsstand sinkt bis zum unteren Niveau 15 ab. Die Dosierpumpe saugt dann Luft, und die sich in der Meßkammer 2 befindenden Elektroden 16 werden nicht mehr von Spülmittel sondern von Luft umgeben, so daß die zugehörige Meßvorrichtung Leerstandsanzeige gibt.

Das im Ausführungsbeispiel der Meßkammer 2 abgewandte offene Ende 17 des Versorgungsabschnitts 3 wird im allgemeinen mit einer nicht dargestellten Verschlußkappe versehen. Sollen jedoch zwei Vorratstanks für die Versorgung der Spülmaschine mit Spülmittel zur Verfügung stehen, so kann an das offene Ende 17 ein zweiter Ansaugteil mit Rückflußsperrscheibe 7, Sauglanze 5 und Vorratstank entsprechend dem Ansaugabschnitt 1 angeschlossen werden. Zwei nicht dargestellte Handabsperrventile ermöglichen es dann, Spülmittel wahlweise aus dem einen oder dem anderen Vorratstank anzusaugen.

In der Zeichnung von Fig. 1 erscheinen die Querschnitte von Sauglanze 5 und Produktaustrittsöffnung 12 sehr unterschiedlich groß. Der Grund dafür besteht darin, daß normaler Weise bis zu vier Dosierpumpen an den Versorgungsabschnitt 3 angeschlossen werden und gleichzeitig Produkt zu den ihnen jeweils zugeordneten Spülanlagen fördern können sollen. Wenn also vier Produktaustrittsöffnungen mit 5 mm Durchmesser versorgt werden müssen, wird eine Sauglanze mit 10 mm Durchmesser benötigt.

**Bezugszeichenliste**

1 = Ansaugabschnitt
2 = Meßkammer
3 = Versorgungsabschnitt
4 = Knie
5 = Sauglanze
6 = waagerechtes Ende
7 = Rückflußsperrscheibe
8 = obere Kante
9 = oberes Niveau
10 = Verbindungsrohr
11 = Verbindungsrohr
12 = Produktaustrittsöffnung

13 = Achse
14 = oberer Rand
15 = unteres Niveau
16 = Elektroden
17 = offenes Ende

## Ansprüche

1. Leerstandsmeßvorrichtung mit Niveaufühler des ein flüssiges Produkt, z. B. Reinigungs-oder Spülmittel wie Flüssigreiniger und Klarspüler, aufnehmenden Vorratstanks einer Spülmaschine oder dergleichen mit einer Dosierpumpe zum Fördern von Produkt aus dem Vorratstank in die Spülmaschine, dadurch **gekennzeichnet,** daß eine zwischen Vorratstank und Dosierpumpe angeordnete Ansaugkammer über eine Rückflußsperre (7) und eine Sauglanze (5) mit dem Vorratstank in Verbindung steht, daß die Dosierpumpe einen Anschluß - (12) an der Ansaugkammer unterhalb deren durch die Rückflußsperre (7) definierten oberen Flüssigkeitsniveaus (9) besitzt und daß der Niveaufühler (16) einem Flüssigkeitsspiegel zwischen dem oberen Flüssigkeitsniveau (9) und einem bei geleertem Vorratstank durch Förderung der Dosierpumpe zu erreichenden, unteren Flüssigkeitsniveau (15) zugeordnet ist.

2. Leerstandsmeßvorrichtung nach Anspruch 1, dadurch **gekennzeichnet,** daß als Ansaugkammer ein horizontal angeordnetes Ansaugrohr vorgesehen ist.

3. Leerstandsmeßvorrichtung nach den Ansprüchen 1 und 2, dadurch **gekennzeichnet,** daß sich der Niveaufühler (16) in der Ansaugkammer zwischen deren zur Sauglanze (5) führender Durchtrittsöffnung und deren als Produktaustrittsöffnung (12) ausgebildetem Anschluß der Dosierpumpe befindet.

4. Leerstandsmeßvorrichtung nach den Ansprüchen 1 bis 3, dadurch **gekennzeichnet,** daß die Rückflußsperre (7) als dammartige Wand ausgebildet ist.

5. Leerstandsmeßvorrichtung nach Anspruch 4, dadurch **gekenn zeichnet,** daß die dammartige Wand (7) bei Ausbildung der Ansaugkammer als Ansaugrohr größenordnungsmäßig zwei Drittel bis drei Viertel des Rohrquerschnitts verschließt und eine waagerecht angeordnete Oberkante (8) besitzt.

6. Leerstandsmeßvorrichtung nach den Ansprüchen 1 bis 5, dadurch **gekennzeichnet,** daß die den Anschluß der Dosierpumpe bildende Produktaustrittsöffnung (12) der Ansaugkammer als Bohrung in der Kammerwand, insbesondere Rohrwand, ausgebildet ist.

7. Leerstandsmeßvorrichtung nach Anspruch 6, dadurch **gekennzeichnet,** daß bei Ausbildung der Ansaugkammer als Ansaugrohr die zur Dosierpumpe führende Bohrung (12) für den Produktaustritt etwa in der Höhe der Achse (13) des Ansaugrohrs liegt und daß der Scheitelpunkt der Bohrung auf einer Höhe unterhalb der oberen Kante (8) der den Produktrückfluß verhindernden Wand (7) liegt.

8. Leerstandsmeßvorrichtung nach den Ansprüchen 1 bis 7, dadurch **gekennzeichnet,** daß der Niveaufühler (16) zwei von oben in den Bereich zwischen dem oberen und dem unteren Flüssigkeitsniveau (9; 15) ragende Elektroden (16) besitzt.

9. Leerstandsmeßvorrichtung nach den Ansprüchen 1 bis 8, dadurch **gekennzeichnet,** daß die Ansaugkammer außerhalb des das zu dosierende Produkt enthaltenden Vorratstanks einerseits und der zu versorgenden Maschine andererseits angerodnet ist.

Fig. 1

3     2     II     1

6     8     4

7

17 9 15 14 13     12     11     16     10     5

II

Schnitt II-II

8

7

Fig. 2

0 271 792

Henkel KGaA